# EUROPÄISCHE PATENTSCHRIFT

(11) **EP 4 281 690 B1**
(45) Veröffentlichungstag und Bekanntmachung des Hinweises auf die Patenterteilung: **01.01.2025**
(21) Anmeldenummer: 23703162.0
(22) Anmeldetag: 01.02.2023
(51) Int. Cl.: F16H 57/08, F16H 57/023, F16H 1/28

(54) **UMLAUFGETRIEBE**
PLANETARY GEAR SYSTEM
SYSTÈME DE TRAIN PLANÉTAIRE

(30) Priorität: 14.04.2022 DE 102022109201
(43) Veröffentlichungstag der Anmeldung: 29.11.2023
(73) Patentinhaber: Neugart GmbH, 77971 Kippenheim (DE)
(72) Erfinder: CIHLAR, Bernd, 77972 Mahlberg (DE); WOLTERS, Dominik, 77972 Mahlberg (DE)
(74) Vertreter: Mertzlufft-Paufler, Cornelius
(86) Internationale Anmeldenummer: PCT/EP2023/052382
(87) Internationale Veröffentlichungsnummer: WO 2023/198333

(56) Entgegenhaltungen:
- DE-A1- 10 254 527
- DE-A1- 10 254 527
- DE-A1- 102019 108 323
- DE-A1- 102019 108 323
- JP-B2- 5 936 472
- JP-B2- 5 936 472
- US-A1- 2002 049 108
- US-A1- 2002 049 108

## Beschreibung

Die Erfindung betrifft ein Umlaufgetriebe mit einem Gehäuse, einem Sonnenrad, einem Planetenträger, zumindest einem Planetenrad und einem Hohlrad, wobei der Planetenträger drehbar in dem Gehäuse gelagert ist.

Derartige Umlaufgetriebe sind beispielsweise als Planetengetriebe aus der Praxis vorbekannt und ermöglichen aufgrund ihrer kompakten Bauweise hohe Übersetzungsverhältnisse bei geringem Platzbedarf. So eignen sich diese Umlaufgetriebe beispielsweise für den Einsatz als Getriebe von Industrierobotern.

Beispielsweise aus der Druckschrift WO 2015/185 036 A1 ist ein Planetengetriebe vorbekannt, das einen geteilten Planetenträger aufweist. Die Teile des geteilten Planetenträgers werden von zwei unterschiedlichen Seiten in das Gehäuse des Planetengetriebes eingeführt und anschließend miteinander verbunden. Aufgrund der gegebenen Platzverhältnisse kann dies jedoch mit gewissem Aufwand verbunden sein und zu Qualitätseinbußen führen.

Aus der DE 10 2019 108323 A1 ist ein Planetengetriebe aufweisend einen Planetenträger mit einem ersten und einem zweiten Stützelement bekannt, mit zumindest zwei Stegelementen, welche jeweils mit dem ersten und dem zweiten Stützelement einstückig verbunden sind, wobei zumindest teilweise durch die Stegelemente und die Stützelemente ein Planetenträgerinnenraum gebildet ist, der eine Planetentasche aufweist, in welcher ein Planetenrad gelagert ist.

Aus der DE 102 54 527 A1 ist ein Verfahren zur Drehmomentübertragung in einem zwei bis sechs Planeteneinheiten aufweisenden Planetengetriebe bekannt.

Aus der JP 5 936472 B2 ist eine Planetenträgerstruktur mit einem Trägerkörper bekannt, in den ein Paar gegenüberliegender Platten und eine Welle integriert sind.

Aufgabe der Erfindung ist es, ein Umlaufgetriebe der eingangs genannten Art bereitzustellen, das sich einfach montieren lässt.

Zur Lösung der Aufgabe wird ein Umlaufgetriebe mit den Mitteln und Merkmalen des unabhängigen Anspruchs vorgeschlagen. Insbesondere wird zur Lösung der Aufgabe somit ein Umlaufgetriebe mit einem Gehäuse, einem Sonnenrad, einem Planetenträger, mindestens einem Planetenrad und einem Hohlrad vorgeschlagen, wobei der Planetenträger drehbar in dem Gehäuse gelagert ist, das Gehäuse eine Montagerichtung zur Montage des Planetenträgers definiert und der Planetenträger an seiner Außenseite einen Lagersitz aufweist, der benachbart zu einem Einführende des Planetenträgers und in Gebrauchsstellung des Planetenträgers in Montagerichtung hinter dem Hohlrad des Umlaufgetriebes angeordnet ist und einen Außendurchmesser aufweist, der kleiner als ein Innendurchmesser, insbesondere als ein Kopfkreisdurchmesser, des Hohlrades ist.

Auf diese Weise ist es möglich, den Planetenträger von einer Seite aus in seine Gebrauchsstellung innerhalb des Gehäuses des Getriebes einzuführen. Eine zweiseitige Montage, wie sie bei dem aus dem Stand der Technik vorbekannten Umlaufgetriebe vorbekannt ist, und eine damit verbundene Teilung des Planetenträgers lassen sich auf diese Weise vermeiden. So kann der Planetenträger beispielsweise einteilig ausgebildet sein oder aber, wenn er zwei- oder mehrteilig ausgebildet ist, noch außerhalb des Gehäuses des Umlaufgetriebes montiert werden. Dies kann die Montage des Umlaufgetriebes erheblich vereinfachen und die Präzision erhöhen.

Der zuvor erwähnte Lagersitz kann als hinterer oder distaler Lagersitz des Planetenträgers bezeichnet werden. Auf dem Lagersitz kann ein Drehlager des Umlaufgetriebes zur drehbaren Lagerung des Planetenträgers in dem Gehäuse angeordnet sein.

Ferner ist erfindungsgemäß vorgesehen, dass ein Lagersitz des Planetenträgers, der in Montagerichtung und in Gebrauchsstellung des Planetenträgers vor dem Hohlrad und/oder benachbart zu einem dem Einführende abgewandten Ende des Planetenträgers angeordnet ist, einen Durchmesser aufweist, der größer als der Innendurchmesser, insbesondere als der Kopfkreisdurchmesser, des Hohlrades und/oder größer als ein Durchmesser des zu dem Einführende benachbarten Lagersitzes des Planetenträgers ist. Das zumindest eine Planetenrad ist als Stufenplanetenrad ausgebildet und weist zwei Lagersitze und zumindest zwei Verzahnungen auf, nämlich eine mit dem Sonnenrad kämmende Sonnenradverzahnung und eine mit dem Hohlrad kämmende Hohlradverzahnung. Die Hohlradverzahnung des Planetenrades ist zwischen den beiden Lagersitzen des Planetenrades angeordnet. Einer der beiden Lagersitze des Planetenrades ist zwischen einem Einführende des Planetenrades und der Hohlradverzahnung angeordnet ist, wobei dieser Lagersitz einen Außendurchmesser aufweist, der kleiner als der Außendurchmesser der Hohlradverzahnung ist. Der andere Lagersitz der beiden Lagersitze des Planetenrades ist zwischen der Hohlradverzahnung und der Sonnenradverzahnung des Planetenrades angeordnet.

Das Gehäuse kann eine Planetenträgeraufnahme mit einer Einführöffnung für den Planetenträger aufweisen, durch die die Montagerichtung des Planetenträgers definiert ist. In der Planetenträgeraufnahme kann der Planetenträger dann drehbar gelagert innerhalb des Gehäuses angeordnet sein. Innerhalb der Planetenträgeraufnahme kann zumindest ein Lagersitz eines Drehlagers für den Planetenträger ausgebildet sein. Innerhalb der Planetenträgeraufnahme kann auch das Hohlrad des Umlaufgetriebes angeordnet sein. Das Hohlrad kann drehfest innerhalb des Gehäuses, insbesondere innerhalb der Planetenträgeraufnahme des Gehäuses, und/oder an dem Gehäuse angeordnet oder ausgebildet sein.

Der Planetenträger kann an seiner Außenseite in Bezug auf seine Rotationsachse zwei axial voneinander beabstandete Lagersitze zur drehbaren Lagerung des Planetenträgers aufweisen. Dies begünstigt eine gleichmäßige Kraftübertragung zwischen dem Planetenträger und dem Gehäuse. Bei in Gebrauchsstellung innerhalb des Gehäuses befindlichem Planetenträger kann das Hohlrad des Umlaufgetriebes zwischen den beiden Lagersitzen angeordnet sein. Die Lagersitze können an einer Außenseite des Planetenträgers ausgebildet sein. An den Lagersitzen können Drehlager zur drehbaren Lagerung des Planetenträgers in dem Gehäuse angeordnet sein.

Der Planetenträger weist, wie zuvor erwähnt, erfindungsgemäß einen Lagersitz auf, der in Montagerichtung und in Gebrauchsstellung des Planetenträgers vor dem Hohlrad und/oder benachbart zu einem dem Einführende abgewandten Ende des Planetenträgers angeordnet ist. Dieser Lagersitz kann als vorderer oder auch als proximaler Lagersitz des Planetenträgers bezeichnet werden und an einer Außenseite des Planetenträgers ausgebildet sein. Dieser Lagersitz weist, wie zuvor erwähnt, erfindungsgemäß einen Durchmesser auf, der größer als der Innendurchmesser, insbesondere als der Kopfkreisdurchmesser, des Hohlrades und/oder größer als ein Durchmesser des zu dem Einführende benachbarten, hinteren Lagersitzes des Planetenträgers ist.

Der Planetenträger kann eine Welle, insbesondere eine Abtriebswelle, aufweisen oder als Welle, insbesondere als Abtriebswelle, des Umlaufgetriebes ausgebildet sein.

Das zumindest eine Planetenrad des Umlaufgetriebes kann in dem Planetenträger drehbar gelagert sein. Das zumindest eine Planetenrad kann mit dem Sonnenrad und/oder mit dem Hohlrad des Umlaufgetriebes kämmen. Insbesondere dann, wenn das Planetenrad als Stufenplanetenrad mit zwei Verzahnungen ausgebildet ist, kann das zumindest eine Planetenrad sowohl mit dem Sonnenrad als auch mit dem Hohlrad des Umlaufgetriebes kämmen.

Der Planetenträger weist erfindungsgemäß zumindest eine Planetenaufnahme für das zumindest eine Planetenrad auf. Vorzugsweise weist der Planetenträger eine Anzahl von Planetenaufnahmen auf, die der Anzahl von Planetenrädern des Umlaufgetriebes entspricht. Ein Planetenrad kann in Gebrauchsstellung in der Planetenaufnahme drehbar gelagert sein.

Die zumindest eine Planetenaufnahme kann beispielsweise als Sackloch oder als Stufenbohrung ausgebildet sein. Wenn die Planetenaufnahme als Stufenbohrung ausgebildet ist, kann das Planetenrad von einer Seite der Stufenbohrung aus in die Planetenaufnahme eingebracht werden. Von der anderen Seite der Stufenbohrung kann zum Beispiel ein Montagehilfsmittel in die Planetenaufnahme eingebracht werden. Mithilfe eines Montagehilfsmittels, beispielsweise eines Bolzens, kann beispielsweise eine Planetenwelle des Planetenrades bei der Montage eines Ritzels abgestützt werden. Ist die Planetenaufnahme als Sackloch ausgebildet, kann auf eine vorzugsweise durchgängige Stufenbohrung verzichtet werden.

Die zumindest eine Planetenaufnahme weist erfindungsgemäß eine Einführöffnung auf, durch die das zumindest eine Planetenrad in einer Montagerichtung in seine Gebrauchsstellung in die Planetenaufnahme einführbar ist. Dabei kann die Planetenaufnahme mit ihrer Einführöffnung so ausgerichtet sein, dass die durch die Planetenaufnahme definierte Montagerichtung mit der Montagerichtung des Planetenträgers in seine Gebrauchsstellung innerhalb des Gehäuses übereinstimmt. Die zuvor erwähnte Einführöffnung des Gehäuses und die Einführöffnung der Planetenaufnahme können jeweils in Axialebenen bezüglich der Rotationsachse des Umlaufgetriebes und/oder an derselben Seite des Umlaufgetriebes angeordnet sein.

Das zumindest eine Planetenrad ist, wie zuvor bereits angedeutet, als Stufenplanetenrad ausgebildet und weist zumindest zwei Verzahnungen auf. Die zumindest zwei Verzahnungen des Planetenrades können sich voneinander unterscheiden, beispielsweise unterschiedliche Kopfkreisdurchmesser und/oder Teilkreisdurchmesser und/oder Wälzkreisdurchmesser aufweisen.

Das Stufenplanetenrad weist eine mit dem Sonnenrad des Umlaufgetriebes kämmende Sonnenradverzahnung und eine mit dem Hohlrad des Umlaufgetriebes kämmende Hohlradverzahnung auf. Auf diese Weise ist es möglich, ein Drehmoment von dem Sonnenrad über das Planetenrad und das Hohlrad auf den Planetenträger des Umlaufgetriebes und umgekehrt zu übertragen.

Die Verzahnungen können in Bezug auf eine Rotationsachse des Planetenrades axial voneinander beabstandet sein. Dadurch kann das Planetenrad mit seinen Verzahnungen an einen axialen Abstand zwischen dem Hohlrad und dem Sonnenrad des Umlaufgetriebes angepasst sein.

Kopfkreisdurchmesser und/oder Teilkreisdurchmesser und/oder Wälzkreisdurchmesser der Sonnenradverzahnung des zumindest einen Planetenrades kann/können hierbei unabhängig von dem Kopfkreisdurchmesser und/oder Teilkreisdurchmesser und/oder Wälzkreisdurchmesser der Hohlradverzahnung des Planetenrades gewählt werden. Die Hohlradverzahnung kann bei in Gebrauchsstellung befindlichem Planetenrad in Bezug auf eine Rotationsachse des Planetenträgers radial über den hinteren oder distalen Lagersitz des Planetenträgers überstehen, der benachbart zu dem Einführende des Planetenträgers angeordnet ist.

In diesem Zusammenhang kann es vorteilhaft sein, wenn zumindest eine Planetenaufnahme eine quer zur Rotationsachse des Planetenträgers ausgerichtete Seitenöffnung aufweist, durch die die Hohlradverzahnung des Planetenrades ragen kann, um in Eingriff mit einer Innenverzahnung des Hohlrades zu gelangen.

Die mit dem Hohlrad kämmende Hohlradverzahnung des zumindest einen Planetenrades ist, wie zuvor erwähnt, zwischen zwei Lagersitzen des Planetenrades angeordnet. Dies begünstigt eine gleichmäßige Verteilung der beim Betrieb des Umlaufgetriebes auf das Planetenrad übertragenen Kräfte. Der andere Lagersitz des Planetenrades ist zwischen der Hohlradverzahnung und der Sonnenradverzahnung des Planetenrades angeordnet. Die Anordnung des Lagersitzes zwischen der Hohlradverzahnung und der Sonnenradverzahnung begünstigt, das Planetenrad in Bezug auf seine Längsachse axial möglichst kurz zu bauen. Dies ermöglicht die Bereitstellung eines besonders kompakten Umlaufgetriebes.

Das zumindest eine Planetenrad weist zwischen einem Einführende des Planetenrades in seine Gebrauchsstellung und der Hohlradverzahnung ferner einen Lagersitz auf, der einen Außendurchmesser aufweist, der kleiner als der Außendurchmesser der Hohlradverzahnung ist. Auf diese Weise ist es möglich, das zumindest eine Planetenrad in einer Montagerichtung von einer Seite aus und/oder als einteiliges Element in seine Gebrauchsstellung innerhalb der zuvor bereits erwähnten Planetenaufnahme des Umlaufgetriebes einzuführen. Der in Montagerichtung des Planetenrades hintere Lagersitz kann aufgrund seiner Abmessung dann das Hohlrad passieren, ohne mit dem Hohlrad zu kollidieren. Dieser hintere Lagersitz kann auch als distaler Lagersitz des Planetenrades bezeichnet werden. Ein Drehlager, das an diesem Lagersitz angeordnet ist, kann einen Außendurchmesser aufweisen, der kleiner als der Außendurchmesser der Hohlradverzahnung des zumindest einen Planetenrades ist. Das Drehlager, das ein Radiallager sein kann, kann so auf den Lagersitz geschoben werden und dann zusammen mit dem Planetenrad in die Planetenaufnahme des Planetenträgers eingeschoben werden.

Die zumindest eine Planetenaufnahme weist erfindungsgemäß einen Lagersitz für eine Außenseite eines Drehlagers, insbesondere für einen Außenring eines Drehlagers, des zumindest einen Planetenrades auf, der benachbart zu der Einführöffnung der Planetenaufnahme angeordnet ist. Dieser Lagersitz kann in Montagerichtung des Planetenrades in die Planetenaufnahme vor dem Hohlrad und/oder vor der zuvor erwähnten Seitenöffnung der Planetenaufnahme angeordnet sein. Der Lagersitz weist erfindungsgemäß einen Innendurchmesser auf, der mindestens so groß wie, vorzugsweise größer als, der Außendurchmesser der Hohlradverzahnung des zumindest einen Planetenrades ist. Der Außenring des an diesem Lagersitz angeordneten Drehlagers weist erfindungsgemäß einen Außendurchmesser auf, der mindestens so groß wie, vorzugsweise größer als, der Außendurchmesser der Hohlradverzahnung des zumindest einen Planetenrades ist. Dies begünstigt die Einführung des Planetenrades von einer Seite aus in seine Gebrauchsstellung innerhalb der Planetenaufnahme.

Die zuvor erwähnte Hohlradverzahnung des zumindest einen Planetenrades kann eine Schrägverzahnung sein. Die zuvor erwähnte Sonnenradverzahnung des zumindest einen Planetenrades kann ebenfalls eine Schrägverzahnung sein. Eine Schrägverzahnung kann die Laufruhe des Umlaufgetriebes begünstigen und auch zu einer geringeren Geräuschentwicklung beitragen.

Eine Schrägverzahnung des Umlaufgetriebes zwischen dem zumindest einen Planetenrad und dem Sonnenrad, beispielsweise die zuvor erwähnte Sonnenradverzahnung, und eine Schrägverzahnung des Umlaufgetriebes zwischen dem zumindest einen Planetenrad und dem Hohlrad, beispielsweise die zuvor erwähnte Hohlradverzahnung, des Umlaufgetriebes können dabei derart aufeinander abgestimmt sein, dass ein Betrag einer effektiven Axialkraft, die aus durch die Schrägverzahnungen im Betrieb des Umlaufgetriebes verursachten Axialkräfte resultiert, kleiner als 10% des Betrages einer, vorzugsweise einer kleinsten, der durch die Schrägverzahnungen verursachten Axialkräfte ist. Besonders vorteilhaft ist es, wenn eine Schrägverzahnung des Umlaufgetriebes zwischen dem zumindest einen Planetenrad und dem Sonnenrad, beispielsweise die zuvor erwähnte Sonnenradverzahnung, und eine Schrägverzahnung des Umlaufgetriebes zwischen dem zumindest einen Planetenrad und dem Hohlrad, beispielsweise die zuvor erwähnte Hohlradverzahnung, des Umlaufgetriebes derart aufeinander abgestimmt sind, dass sich im Betrieb des Umlaufgetriebes durch die Schrägverzahnungen jeweils verursachte Axialkräfte gegenseitig aufheben.

Ein gegenseitiges Aufheben der Axialkräfte in diesem Sinne kann auch dann vorliegen, wenn eine geringe effektive Axialkraft auftritt, die aus den durch die Schrägverzahnungen jeweils verursachten Axialkräften resultiert und auf Fertigungstoleranzen der aufeinander abgestimmten Schrägverzahnungen zurückzuführen ist.

Auf diese Weise ist es möglich, dass zumindest eine Planetenrad mit einer vergleichsweise günstigen Radiallagerung drehbar in dem Planetenträger zu lagern, beispielsweise mittels kleinbauenden Nadellagern. Derartige Nadellager zeichnen sich durch ihre hohe radiale Belastbarkeit aus und benötigen wenig radialen Bauraum. Nadellager sind jedoch weniger gut für die Aufnahme von Axialkräften geeignet. Durch den Axialkräfteausgleich, der mithilfe der aufeinander abgestimmten Schrägverzahnungen möglich ist, können resultierende Axialkräfte kompensiert und die Lagerung des zumindest einen Planetenrades entsprechend günstig gestaltet werden. Zur Abstützung restlicher Axialkräfte kann das Umlaufgetriebe zumindest ein nachfolgend noch näher erläutertes Axiallagerelement aufweisen.

Es kann vorgesehen sein, dass ein Verhältnis der Schrägungswinkel der Schrägverzahnungen einem Verhältnis der Wälzkreisdurchmesser der Schrägverzahnungen entspricht. Ist diese Bedingung erfüllt, begünstigt dies eine vollständige oder zumindest weitgehende gegenseitige Aufhebung der durch die Schrägverzahnungen jeweils verursachten Axialkräfte. Ein Wälzkreisdurchmesser der Sonnenradverzahnung kann beispielsweise 20 mm betragen. Ein Wälzkreisdurchmesser der Hohlradverzahnung kann beispielsweise 10 mm betragen. Ein Schrägungswinkel der Sonnenradverzahnung kann demnach dann beispielsweise 10° betragen, während ein Schrägungswinkel der Hohlradverzahnung 5° beträgt. Die Schrägungswinkel der beiden Schrägverzahnungen können dabei in die gleiche Richtung zeigen. Der Schrägungswinkel der Hohlradverzahnung kann beispielsweise zwischen 2° und 15° betragen. Der Schrägungswinkel der Sonnenradverzahnung kann beispielsweise zwischen 4° und 30° betragen.

Das zumindest eine Planetenrad kann eine Planetenwelle aufweisen. Die Sonnenradverzahnung kann an einem Sonnenritzel ausgebildet sein, das an der Planetenwelle angeordnet ist.

Zwischen Planetenwelle und Sonnenritzel kann Klebstoff angeordnet sein, um ein Durchrutschen des Sonnenritzels zu vermeiden. Ferner kann zwischen Planetenwelle und Sonnenritzel eine Konusverbindung vorgesehen sein, über die das Sonnenritzel mit der Planetenwelle verbunden ist. Bei einer bevorzugten Ausführungsform des Umlaufgetriebes ist vorgesehen, dass zwischen Sonnenritzel und Planetenwelle sowohl Klebstoff angeordnet als auch eine Konusverbindung ausgebildet ist, so dass das Sonnenritzel bei dieser Ausführungsform besonders zuverlässig auf der Planetenwelle festgelegt werden kann.

Das Sonnenritzel kann beispielsweise mit einer Schraube und/oder mit einer Mutter an der Planetenwelle fixiert sein. Wird eine Schraube zur Fixierung des Sonnenritzels an der Planetenwelle verwendet, kann die Schraube beispielsweise stirnseitig in die Planetenwelle eingeschraubt sein.

Ein Schrägungswinkel der Sonnenradverzahnung kann größer oder kleiner als oder gleich groß wie ein Schrägungswinkel der Hohlradverzahnung des Planetenrades sein, je nachdem welche Wälzkreisdurchmesser die Verzahnungen jeweils haben.

Insbesondere dann, wenn als Drehlager zur drehbaren Lagerung des zumindest einen Planetenrades des Umlaufgetriebes ein Radiallager verwendet wird, das bauartbedingt weniger gut zur Aufnahme von Axialkräften geeignet ist, kann es vorteilhaft sein, wenn das Umlaufgetriebe zumindest ein Axiallagerelement, beispielsweise eine Axialgleitscheibe, aufweist, das zur Aufnahme von Axialkräften eingerichtet ist. Das zumindest eine Axiallagerelement kann zumindest einem Drehlager zur drehbaren Lagerung des zumindest einen Planetenrades zugeordnet sein. Sollten beim Betrieb des Umlaufgetriebes Axialkräfte auf das zumindest eine Planetenrad wirken, können diese über das zumindest eine Axiallagerelement aufgenommen und abgeleitet werden.

Derartige Axialkräfte könnten beispielsweise schwerkraftbedingt auftreten, wenn das Umlaufgetriebe bei seiner Verwendung seine Lage im Raum ändert. Dies ist beispielsweise möglich, wenn das Umlaufgetriebe an einem Industrieroboter eingesetzt wird oder wenn es nicht gelingt, die Axialkräfte gänzlich zu kompensieren.

Vorzugsweise weist das Umlaufgetriebe für jedes Drehlager eines jeden Planetenrades jeweils zumindest ein derartiges Axiallagerelement auf, das zur Aufnahme von Axialkräften eingerichtet ist.

Zusammenfassend betrifft die Erfindung somit ein Umlaufgetriebe mit einem Gehäuse, einem Sonnenrad, einem Planetenträger, zumindest einem Planetenrad und einem Hohlrad. Der Planetenträger ist drehbar in dem Gehäuse gelagert. Das Gehäuse definiert eine Montagerichtung zur Montage des Planetenträgers. Ein Lagersitz des Planetenträgers für ein Drehlager, das zur drehbaren Lagerung des Planetenträgers in dem Gehäuse dient, der benachbart zu einem Einführende des Planetenträgers und in Gebrauchsstellung des Planetenträgers in Montagerichtung hinter dem Hohlrad angeordnet ist, weist einen Durchmesser auf, der kleiner als ein Innendurchmesser, insbesondere als ein Kopfkreisdurchmesser, des Hohlrades ist. Die Erfindung wird nachfolgend anhand von Ausführungsbeispielen näher erläutert, ist aber nicht auf diese Ausführungsbeispiele beschränkt. Weitere Ausführungsbeispiele ergeben sich durch Kombination der Merkmale entsprechend des Schutzbereichs welcher durch die angehängten Ansprüche definiert ist.

Es zeigen:
- Fig. 1: eine geschnittene Seitenansicht eines Umlaufgetriebes, dessen Gehäuse eine Montagerichtung zur Montage eines Planetenträgers des Umlaufgetriebes definiert, wobei ein Lagersitz des Planetenträgers, der benachbart zu einem Einführende des Planetenträgers und in Gebrauchsstellung des Planetenträgers in Montagerichtung hinter einem Hohlrad des Umlaufgetriebes angeordnet ist, einen Durchmesser aufweist, der kleiner als ein Innendurchmesser des Hohlrades ist,

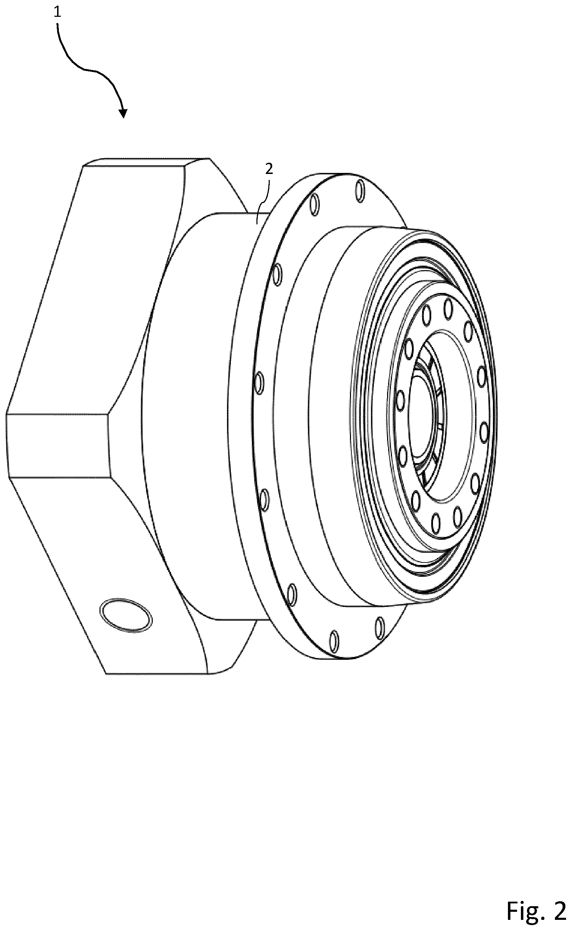

- Fig. 2: eine isometrische Darstellung des Umlaufgetriebes aus Fig. 1,
- Fig. 3: eine isometrische Darstellung des Planetenträgers des in den vorherigen Figuren gezeigten Umlaufgetriebes mit einem mit Geradverzahnungen versehenen Planetenrad vor einer der insgesamt sechs gleichmäßig um eine Rotationsachse des Planetenträgers verteilt angeordneten Planetenaufnahmen des Planetenträgers,
- Fig. 4: eine geschnittene Seitenansicht des in Figur 3 gezeigten Planetenträgers und Planetenrades,
- Fig. 5 bis 7: unterschiedliche Ansichten eines als Stufenplanetenrad ausgebildeten Planetenrades, wobei das Planetenrad zwei axial voneinander beabstandete Geradverzahnungen aufweist, sowie

- Fig. 8 bis 10: unterschiedliche Ansichten des in Figur 4 gezeigten Planetenrades, das bei dem in den Figuren 1 und 2 gezeigten Umlaufgetriebe eingesetzt werden kann, wobei das Planetenrad als Stufenplanetenrad ausgebildet ist und zwei Schrägverzahnungen aufweist.

Sämtliche Figuren zeigen zumindest Teile eines im Ganzen mit 1 bezeichneten Umlaufgetriebes, das als Planetengetriebe ausgebildet ist.

Das Umlaufgetriebe 1 umfasst ein Gehäuse 2, ein Sonnenrad 3, einen als Abtriebswelle dienenden Planetenträger 4 sowie mehrere als Stufenplanetenräder ausgebildete Planetenräder 5. Im Inneren des Gehäuses 2 ist ein Hohlrad 6 des Umlaufgetriebes 1 angeordnet. Der Planetenträger 5 ist innerhalb des Gehäuses 2 relativ drehbar zu dem feststehenden Hohlrad 6 gelagert.

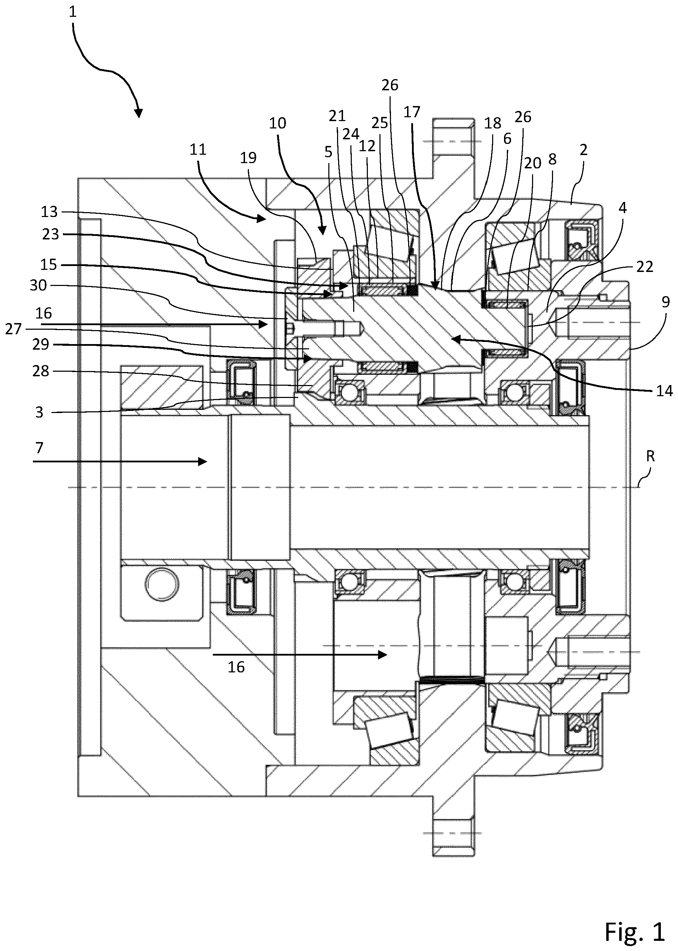

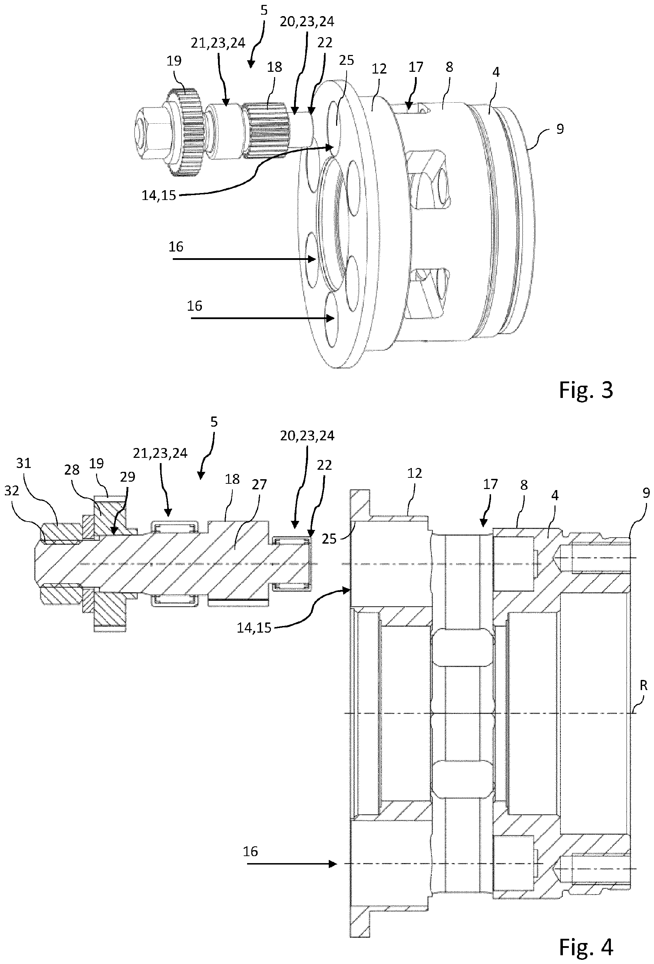

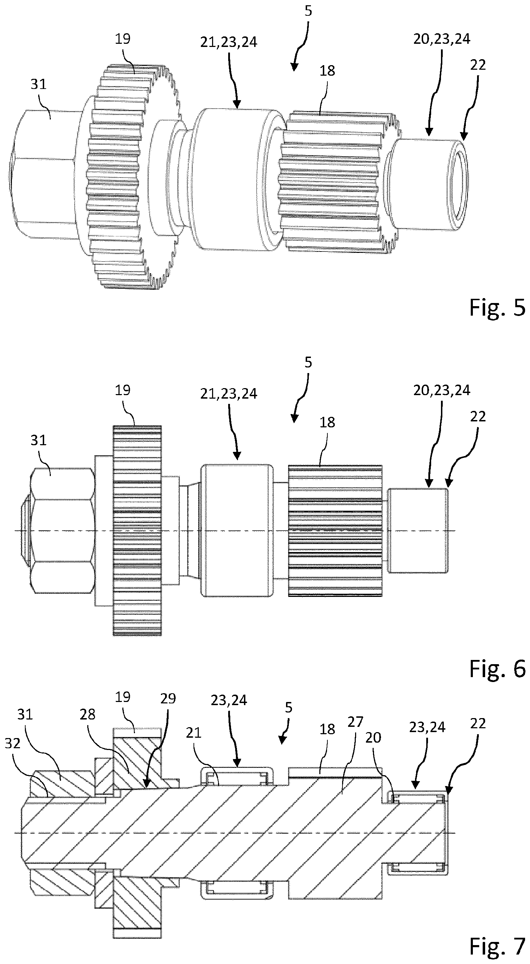

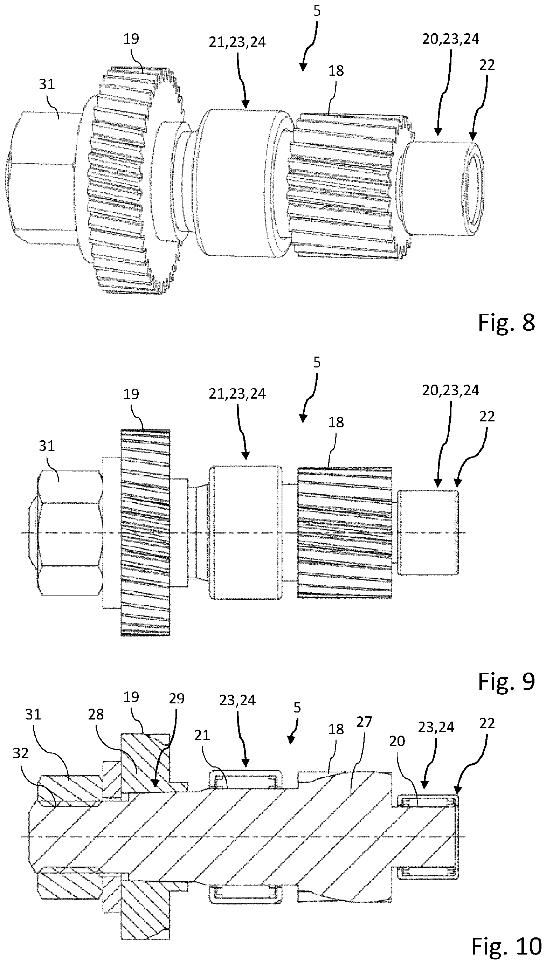

Die Figuren 3 und 4 zeigen Einzelansichten des Planetenträgers 4 und eines Planetenrades 5. Die Figuren 5, 6 und 7 zeigen eine erste Ausführungsform eines Planetenrades 5, das Geradverzahnungen aufweist. Die Figuren 8, 9 und 10 zeigen eine zweite Ausführungsform eines Planetenrades 5, das ebenfalls als Stufenplanetenrad ausgebildet ist und zwei Schrägverzahnungen aufweist. Die Planetenräder 5 des in Figur 1 gezeigten Umlaufgetriebes 1 sind Planetenräder 5 mit Schrägverzahnungen.

Das Gehäuse 2 des in den Figuren gezeigten Umlaufgetriebes 1 definiert eine Montagerichtung 7 zur Montage des Planetenträgers 4. Der Planetenträger 4 weist an seiner Außenseite einen Lagersitz 8 auf, der benachbart zu einem Einführende 9 des Planetenträgers 4 und in Gebrauchsstellung des Planetenträgers 4 in Montagerichtung 7 hinter dem Hohlrad 6 angeordnet ist und auch als distaler Lagersitz bezeichnet werden kann. Dieser distale Lagersitz 8 weist einen Außendurchmesser auf, der kleiner als ein Innendurchmesser, nämlich kleiner als der Kopfkreisdurchmesser des Hohlrades 6 ist.

Auf diese Weise kann der Planetenträger 4 ausgehend von einer Seite des Gehäuses 2 in seine Gebrauchsstellung innerhalb des Gehäuses 2 eingesetzt werden. Dies begünstigt die einteilige Ausbildung des Planetenträgers 5, die besonders gut aus den Figuren 3 und 4 ersichtlich ist.

Das Gehäuse 2 weist eine Planetenträgeraufnahme 10 mit einer Einführöffnung 11 für den Planetenträger 4 auf. Die Planetenträgeraufnahme 10 und ihre Einführöffnung 11 geben die Montagerichtung 7 des Planetenträger 4 vor.

Das Hohlrad 6 ist innerhalb der Planetenträgeraufnahme 10 des Gehäuses 2 angeordnet und zudem drehfest. Der Planetenträger 4 weist an seiner Außenseite insgesamt zwei in Bezug auf seine Rotationsachse R axial voneinander beabstandete Lagersitze, nämlich den bereits zuvor erwähnten, hinteren oder distalen Lagersitz 8 und einen vorderen oder proximalen Lagersitz 12 auf. Der vordere Lagersitz 12 des Planetenträgers 4 ist der Lagersitz, der in Gebrauchsstellung des Planetenträgers 4 näher an der Einführöffnung 11 der Planetenträgeraufnahme 10 für den Planetenträger 4 angeordnet ist. Das Hohlrad 6 ist bei in Gebrauchsstellung befindlichem Planetenträger 4 zwischen den beiden Lagersitzen 8 und 12 angeordnet. Beide Lagersitze 8 und 12 sind an einer Außenseite des Planetenträgers 4 ausgebildet und dienen der drehbaren Lagerung des Planetenträgers 4 in dem Gehäuse 2 des Umlaufgetriebes.

Der vordere Lagersitz 12 des Planetenträgers 4 ist in Montagerichtung 7 und in Gebrauchsstellung des Planetenträger 4 vor dem Hohlrad 6 und zudem benachbart zu einem dem Einführende 9 des Planetenträgers 4 abgewandten Ende 13 des Planetenträgers 4 angeordnet. Der vordere Lagersitz 12 weist einen Durchmesser auf, der größer als der Innendurchmesser, nämlich größer als der Kopfkreisdurchmesser des Hohlrades 6 und größer als ein Durchmesser des zu dem Einführende 9 des Planetenträger 4 benachbarten, hinteren Lagersitzes 8 des Planetenträgers 4 ist.

Die Planetenräder 5 sind drehbar in dem Planetenträger 4 gelagert. Die Planetenräder 5 kämmen sowohl mit dem Sonnenrad 3 als auch mit dem Hohlrad 6 des Umlaufgetriebes 1. Der Planetenträger 4 weist für jedes der Planetenräder 5 jeweils eine Planetenaufnahme 14 auf. Insgesamt ist der Planetenträger 4 mit sechs Planetenaufnahmen 14 versehen.

Jede Planetenaufnahme 14 ist als Sackloch ausgebildet und weist eine Einführöffnung 15 auf, durch die die Planetenräder 5 in einer Montagerichtung 16 in ihre Gebrauchsstellung innerhalb der Planetenaufnahmen 14 eingeführt werden können. Die Montagerichtung 16 der Planetenräder 5 stimmt mit der Montagerichtung 7 des Planetenträgers 4 überein. Der Planetenträger 4 und die Planetenräder 5 können somit ausgehend von derselben Seite des Gehäuses 2 montiert werden. Der Planetenträger 4 weist für jede seiner Planetenaufnahmen 14 jeweils eine Seitenöffnung 17 auf. Durch die Seitenöffnungen 17 sind die Planetenaufnahmen 14 des Planetenträgers 4 seitlich zugänglich. Durch die Seitenöffnungen 17 können nachfolgend noch näher erläuterte Hohlradverzahnungen 18 der als Stufenplanetenräder ausgebildeten Planetenräder 5 ragen, um in Eingriff mit dem Hohlrad 6 des Umlaufgetriebes 1 zu gelangen.

Wie zuvor bereits erwähnt, sind die Planetenräder 5 als Stufenplanetenräder ausgebildet und weisen zwei Verzahnungen 18 und 19 auf. Die Verzahnungen 18 und 19 sind in Bezug auf eine Rotationsachse des jeweiligen Planetenrades 5 axial voneinander beabstandet. Beide Verzahnungen 18 und 19 unterscheiden sich voneinander, beispielsweise durch ihre Kopfkreisdurchmesser und/oder Teilkreisdurchmesser und/oder Wälzkreisdurchmesser.

Jedes Planetenrad 5 weist eine mit dem Sonnenrad 3 des Umlaufgetriebes 1 kämmende Sonnenradverzahnung 19 und eine mit dem Hohlrad 6 des Umlaufgetriebes 1 kämmende Hohlradverzahnung 18 auf.

Insbesondere die Schnittdarstellungen des Umlaufgetriebes 1 und seiner Bestandteile verdeutlichen, dass die Hohlradverzahnungen 18 durch die Seitenöffnungen 17 des Planetenträgers 4 ragen und in Eingriff mit dem Hohlrad 6 des Umlaufgetriebes 1 stehen.

Die mit dem Hohlrad 6 kämmenden Hohlradverzahnungen 18 der Planetenräder 5 sind dabei jeweils zwischen zwei Lagersitzen 20 und 21 des jeweiligen Planetenrades 5 angeordnet. Jedes Planetenrad 5 weist einen Lagersitz 20 auf, der zwischen einem Einführende 22 des jeweiligen Planetenrades 5 und der Hohlradverzahnung 18 angeordnet ist.

Dieser Lagersitz 20 weist einen Durchmesser auf, der kleiner als der Außendurchmesser der Hohlradverzahnung 18 ist. Auf diesem Lagersitz 20 ist ein Drehlager 23, nämlich ein Radiallager angeordnet. Dieses Drehlager 23, nämlich sein Außenring 24, weist einen Außendurchmesser auf, der höchstens so groß wie und vorzugsweise kleiner als der Außendurchmesser der Hohlradverzahnung 18 des Planetenrades 5 ist. Aufgrund dieser Abmessung ist es möglich, den Lagersitz 20 zusammen mit dem an dem Lagersitz 20 angeordneten Drehlager 23 an dem Hohlrad 6 vorbei in seine beispielsweise in Figur 1 gezeigte Zielposition zu bewegen und dabei die Hohlradverzahnung 18 des Planetenrades 5 in Eingriff mit dem Hohlrad 6 des Umlaufgetriebes 1 zu bringen.

Die Figuren zeigen außerdem, dass der jeweils mit 21 bezeichnete Lagersitz bei jedem der Planetenräder 5 zwischen der jeweiligen Hohlradverzahnung 18 und der jeweiligen Sonnenradverzahnung 19 des Planetenrades 5 angeordnet ist. Jede Planetenaufnahme 14 weist benachbart zu der Einführöffnung 15 in die Planetenaufnahme 14 und noch vor der Seitenöffnung 17 einen Lagersitz 25 für einen Außenring 24 eines Drehlagers 23 eines in der Planetenaufnahme 14 zu positionierenden Planetenrades 5 auf. Dieser Lagersitz 25 liegt in Montagerichtung 16 des Planetenrades 5 noch vor dem Hohlrad 6 und ist damit zwischen der axialen Einführöffnung 15 und der radialen Seitenöffnung 17 der Planetenaufnahme 14 angeordnet.

Ein Innendurchmesser dieses Lagersitzes 25 ist dabei mindestens so groß wie der Außendurchmesser der Hohlradverzahnung 18 des Planetenrades 5, das in die Planetenaufnahme 14 eingeführt werden soll. Der Außenring 24 des an diesem Lagersitz 25 angeordneten Drehlagers 23 hat dann folgerichtig einen Außendurchmesser, der mindestens so groß wie und vorzugsweise größer als der Außendurchmesser der Hohlradverzahnung 18 des Planetenrades 5 ist. Auf diese Weise wird sichergestellt, dass die Planetenaufnahme 14 in ihrem der Einführöffnung 15 nachgelagerten Bereich ausreichend Platz bietet, um die Hohlradverzahnung 18 des Planetenträger 5 in ihre Gebrauchsstellung an dem Hohlrad 6 des Umlaufgetriebes 1 zu bringen.

Die Figuren 8-10 zeigen eine Ausführungsform eines Planetenrades 5, das ebenfalls als Stufenplanetenrad ausgebildet ist und eine Hohlradverzahnung 18 und eine Sonnenradverzahnung 19 aufweist, die jeweils als Schrägverzahnungen ausgebildet sind.

Das in den Figuren 8-10 gezeigte Planetenrad 5 ermöglicht daher eine Schrägverzahnung eines Umlaufgetriebes 1 zwischen dem Sonnenrad 3 und dem Planetenrad 5 und eine weitere Schrägverzahnung des Umlaufgetriebes 1 zwischen dem Planetenrad 5 und dem Hohlrad 6 des Umlaufgetriebes 1.

Die Schrägverzahnungen sind dabei derart aufeinander abgestimmt, dass sich im Betrieb des Umlaufgetriebes 1 durch die Schrägverzahnungen 18,19 verursachte Axialkräfte gegenseitig aufheben, oder zumindest, dass ein Betrag einer effektiven Axialkraft, die aus den jeweiligen Axialkräften resultiert, kleiner als 10% des Betrages der kleineren der von den Schrägverzahnungen 18, 19 verursachten Axialkräfte ist. Optimalerweise entspricht ein Verhältnis der Schrägungswinkel der beiden Schrägverzahnungen 18,19 einem Verhältnis der Wälzkreisdurchmesser der Schrägverzahnungen 18, 19, um eine bestmögliche Kompensation der Axialkräfte, die durch die Schrägverzahnungen jeweils verursacht werden, zu erreichen. Dabei kann ein Schrägungswinkel der Sonnenradverzahnung 19 größer oder aber auch kleiner als oder gleich groß wie ein Schrägungswinkel der Hohlradverzahnung 18 des Planetenrades 5 sein, je nachdem, welche und/oder Wälzdurchmesser die Verzahnungen 18 und 19 aufweisen.

Das Umlaufgetriebe 1 weist für jedes Planetenrad 5 zwei Axiallagerelemente 26 in Form von Axialgleitscheiben auf. Die Axiallagerelemente 26 sind den Drehlagern 23 der Planetenräder 5 zugeordnet und zur Aufnahme von Axialkräften eingerichtet. Die Axiallagerelemente 26 sind beidseits der Hohlradverzahnung 18 des jeweiligen Planetenrades 5 angeordnet.

Die Axiallagerelemente 26 kommen dann zum Einsatz, wenn der Axialkräfteausgleich nicht komplett gelingt, der durch die Hohlradverzahnung 18 und die Sonnenradverzahnung 19 der Planetenräder 5 bereitgestellt wird. Die Axiallagerelemente 26 können auch dann vorteilhaft sein, wenn Axialkräfte beispielsweise durch eine Lageänderung des Umlaufgetriebes 1 im Raum in bestimmten Fällen doch noch auf die Planetenräder 5 des Umlaufgetriebes 1 wirken und abgeleitet werden müssen. Sofern die durch die Schrägverzahnungen der Hohlradverzahnung 18 und der Sonnenradverzahnung 19 jeweils verursachten Axialkräfte unterschiedlich groß sein sollten, sind die Schrägverzahnungen 18 und 19 dennoch zumindest derart aufeinander abgestimmt, dass ein Betrag einer effektiven Axialkraft, die aus den unterschiedlich großen Axialkräften resultiert, kleiner als 10% des Betrages der kleineren der beiden durch die Schrägverzahnungen 18,19 jeweils verursachten Axialkräfte ist. Eine derartig geringe resultierende Axialkraft kann mit den zuvor erwähnten Axiallagerelementen 26 aufgefangen werden.

Die Figuren zeigen, dass die Planetenräder 5 jeweils eine Planetenwelle 27 aufweisen. Die Sonnenradverzahnungen 19 der Planetenräder 5 sind jeweils an einem Sonnenritzel 28 ausgebildet, das an der Planetenwelle 27 des jeweiligen Planetenrades 5 angeordnet ist. Um das Sonnenritzel 28 in seiner Position an der jeweiligen Planetenwelle 27 zu sichern, ist Klebstoff zwischen Sonnenritzel 28 und Planetenwelle 27 eingebracht. Ferner ist jedes Sonnenritzel 28 über eine Konusverbindungen 29 mit seiner Planetenwelle 27 verbunden. Die Konusverbindung 29 umfasst einen Außenkonus an der Planetenwelle 27 und einen Innenkonus an dem Sonnenritzel 28. Die Figuren zeigen ferner, dass die Sonnenritzel 28 entweder mit einer Schraube 30 oder mit einer Mutter 31 an der jeweiligen Planetenwelle 27 fixiert sind. Bei der Variante des Umlaufgetriebes 1, bei der die Sonnenritzel 28 mittels Schrauben 30 an den Planetenwelle 27 fixiert sind, kann es zweckmäßig sein, das jeweilige Sonnenritzel 28 mit einem Presswerkzeugs auf die Planetenwelle 27 zu pressen.

Bei der Variante des Umlaufgetriebes 1, bei der die Sonnenritzel 28 mittels einer Mutter 31 an der jeweiligen Planetenwelle 27 fixiert sind, kann das Aufpressen des Sonnenritzels 28 auf den Konus 29 der Planetenwelle 27 durch Anziehen der Mutter 31 erfolgen. Dabei wird die Mutter 31 auf einen Gewindeabschnitt 32 der Planetenwelle 27 geschraubt.

### Bezugszeichenliste

- 1: Umlaufgetriebe
- 2: Gehäuse
- 3: Sonnenrad
- 4: Planetenträger
- 5: Planetenrad
- 6: Hohlrad
- 7: Montagerichtung von 4
- 8: hinterer, distaler Lagersitz an 4
- 9: Einführende von 4
- 10: Planetenträgeraufnahme in 2 für 4
- 11: Einführöffnung
- 12: vorderer, proximaler Lagersitz von 4
- 13: dem Einführende abgewandtes Ende von 4
- 14: Planetenaufnahme
- 15: Einführöffnung
- 16: Montagerichtung von 5
- 17: Seitenöffnung
- 18: Hohlradverzahnung von 5
- 19: Sonnenradverzahnung von 5
- 20: Lagersitz an 5
- 21: Lagersitz an 5
- 22: Einführende
- 23: Drehlager
- 24: Außenring von 23
- 25: Lagersitz in 14, benachbart zu 15
- 26: Axiallagerelement
- 27: Planetenwelle
- 28: Sonnenritzel
- 29: Konusverbindung
- 30: Schraube
- 31: Mutter
- 32: Gewindeabschnitt

## Patentansprüche

1. Umlaufgetriebe (1) mit einem Gehäuse (2), einem Sonnenrad (3), einem Planetenträger (4), zumindest einem Planetenrad (5) und einem Hohlrad (6), wobei der Planetenträger (4) drehbar in dem Gehäuse (2) gelagert ist, wobei das Gehäuse (2) eine Montagerichtung (7) zur Montage des Planetenträgers (4) definiert und der Planetenträger (4) an seiner Außenseite einen Lagersitz (8) aufweist, der benachbart zu einem Einführende (9) des Planetenträgers (4) und in Gebrauchsstellung des Planetenträgers (4) in Montagerichtung (7) hinter dem Hohlrad (6) angeordnet ist und einen Außendurchmesser aufweist, der kleiner als ein Innendurchmesser, insbesondere als ein Kopfkreisdurchmesser, des Hohlrades (6) ist, wobei ein Lagersitz (12) des Planetenträgers (4), der in Montagerichtung (7) und in Gebrauchsstellung des Planetenträgers (4) vor dem Hohlrad (6) und/oder benachbart zu einem dem Einführende (9) abgewandten Ende (13) des Planetenträgers (4) angeordnet ist, einen Durchmesser aufweist, der größer als der Innendurchmesser, insbesondere als der Kopfkreisdurchmesser, des Hohlrades (6) und/oder größer als ein Durchmesser des zu dem Einführende (9) benachbarten Lagersitzes (8) des Planetenträgers (4) ist, **dadurch gekennzeichnet, dass** das zumindest eine Planetenrad (5) als Stufenplanetenrad ausgebildet ist, zwei Lagersitze (20,21) und zumindest zwei Verzahnungen (18,19) aufweist, nämlich eine mit dem Sonnenrad (3) kämmende Sonnenradverzahnung (19) und eine mit dem Hohlrad (6) kämmende Hohlradverzahnung (18), dass die Hohlradverzahnung (18) des Planetenrades (5) zwischen den beiden Lagersitzen (20,21) des Planetenrades (5) angeordnet ist, dass ein Lagersitz (20) des Planetenrades (5) zwischen einem Einführende (22) des Planetenrades (5) und der Hohlradverzahnung (18) angeordnet ist, wobei dieser Lagersitz (20) einen Außendurchmesser aufweist, der kleiner als der Außendurchmesser der Hohlradverzahnung (18) ist, dass der andere Lagersitz (21) des Planetenrades (5) zwischen der Hohlradverzahnung (18) und der Sonnenradverzahnung (19) des Planetenrades (5) angeordnet ist, dass der Planetenträger (4) zumindest eine Planetenaufnahme (14) für das zumindest eine Planetenrad (5) aufweist, und dass die Planetenaufnahme (14) eine Einführöffnung (15) aufweist, durch die das zumindest eine Planetenrad (5) in einer Montagerichtung (16) in seine Gebrauchsstellung in die Planetenaufnahme (14) einführbar ist, wobei die zumindest eine Planetenaufnahme (14) benachbart zu ihrer Einführöffnung (15) einen Lagersitz (25) für eine Außenseite, insbesondere für einen Außenring (24), eines Drehlagers (23) des zumindest einen Planetenrades (5) aufweist, der einen Innendurchmesser aufweist, der mindestens so groß wie der Außendurchmesser der Hohlradverzahnung (18) des zumindest einen Planetenrades (5) ist, und wobei ein an diesem Lagersitz (25) angeordnetes Drehlager (23) einen Außendurchmesser aufweist, der mindestens so groß wie der Außendurchmesser der Hohlradverzahnung (18) des zumindest einen Planetenrades (5) ist.

2. Umlaufgetriebe (1) nach Anspruch 1, wobei das Gehäuse (2) eine Planetenträgeraufnahme (10) mit einer Einführöffnung (11) für den Planetenträger (4) aufweist, durch die die Montagerichtung (7) des Planetenträgers (4) definiert ist, und/oder wobei der Planetenträger (4) einteilig ausgebildet ist.

3. Umlaufgetriebe (1) nach Anspruch 1 oder 2, wobei der Planetenträger (4) an seiner Außenseite zwei in Bezug auf seine Rotationsachse (R) axial voneinander beabstandete Lagersitze (8,12) aufweist, zwischen denen das Hohlrad (6) bei in Gebrauchsstellung befindlichem Planetenträger (4) angeordnet ist.

4. Umlaufgetriebe (1) nach einem der vorherigen Ansprüche, wobei der Planetenträger (4) eine Welle, insbesondere eine Abtriebswelle, aufweist oder als Welle, insbesondere als Abtriebswelle, ausgebildet ist.

5. Umlaufgetriebe (1) nach einem der vorherigen Ansprüche, wobei das zumindest eine Planetenrad (5) in dem Planetenträger (4) drehbar gelagert ist und mit dem Sonnenrad (3) und mit dem Hohlrad (6) kämmt.

6. Umlaufgetriebe (1) nach einem der vorherigen Ansprüche, wobei die Montagerichtung (7) des Planetenträgers (4) in das Gehäuse (2) und die Montagerichtung (16) des zumindest einen Planetenrades (5) in die Planetenaufnahme (14) übereinstimmen, und/oder wobei die Planetenaufnahme (14) als Sackloch oder als Stufenbohrung ausgebildet ist.

7. Umlaufgetriebe (1) nach einem der vorherigen Ansprüche, wobei der Planetenträger (4) zumindest eine Seitenöffnung (17) in eine Planetenaufnahme (14) des Planetenträgers (4) aufweist.

8. Umlaufgetriebe (1) nach einem der vorherigen Ansprüche, wobei sich die beiden Verzahnungen (18,19) des Planetenrades (5) unterscheiden, und/oder wobei die beiden Verzahnungen (18,19) in Bezug auf eine Rotationsachse des Planetenrades (5) axial voneinander beabstandet sind.

9. Umlaufgetriebe (1) nach einem der vorherigen Ansprüche, wobei die Planetenaufnahme (14) eine quer zur Rotationsachse (R) des Planetenträgers (4) ausgerichtete Seitenöffnung (17) für eine Hohlradverzahnung (18) des Planetenrades (5) aufweist.

10. Umlaufgetriebe (1) nach einem der Ansprüche 1 bis 9, wobei auf dem Lagersitz (20), der zwischen dem Einführende (22) des Planetenrades (5) und der Hohlradverzahnung (18) angeordnet ist, ein Drehlager (23), insbesondere ein Radiallager, angeordnet ist, dessen Außendurchmesser kleiner als der Außendurchmesser der Hohlradverzahnung (18) des zumindest einen Planetenrades (5) ist.

11. Umlaufgetriebe (1) nach einem der Ansprüche 1 bis 10, wobei die Hohlradverzahnung (18) des zumindest einen Planetenrades (5) eine Schrägverzahnung ist und/oder wobei die Sonnenradverzahnung (19) des zumindest einen Planetenrades (5) eine Schrägverzahnung ist.

12. Umlaufgetriebe (1) nach einem der vorherigen Ansprüche, wobei eine Schrägverzahnung des Umlaufgetriebes (1) zwischen dem zumindest einen Planetenrad (5) und dem Sonnenrad (3) und eine Schrägverzahnung des Umlaufgetriebes (1) zwischen dem zumindest einen Planetenrad (5) und dem Hohlrad (6) des Umlaufgetriebes (1) derart aufeinander abgestimmt sind, dass ein Betrag einer effektiven Axialkraft, die aus im Betrieb des Umlaufgetriebes (1) durch die Schrägverzahnungen (18,19) verursachten Axialkräften resultiert, kleiner als 10% eines Betrages einer, vorzugsweise einer kleinsten, der durch die Schrägverzahnungen (18,19) jeweils verursachten Axialkräfte ist, oder dass sich im Betrieb des Umlaufgetriebes (1) durch die Schrägverzahnungen (18,19) verursachte Axialkräfte gegenseitig aufheben.

13. Umlaufgetriebe (1) nach dem vorherigen Anspruch, wobei ein Verhältnis der Schrägungswinkel der Schrägverzahnungen (18,19) einem Verhältnis der Wälzkreisdurchmesser der Schrägverzahnungen (18,19) entspricht.

14. Umlaufgetriebe (1) nach einem der vorherigen Ansprüche, wobei das zumindest eine Planetenrad (5) eine Planetenwelle (27) aufweist und die Sonnenradverzahnung (19) an einem Sonnenritzel (28) ausgebildet ist, das an der Planetenwelle (27) angeordnet ist.

15. Umlaufgetriebe (1) nach einem der vorherigen Ansprüche, wobei das Umlaufgetriebe (1) zumindest ein Axiallagerelement (26), insbesondere eine Axialgleitscheibe, aufweist, das zumindest einem Drehlager (23) zur drehbaren Lagerung des zumindest einen Planetenrades (5) zugeordnet und zur Aufnahme von Axialkräften eingerichtet ist, vorzugsweise wobei jedem Drehlager (23) des Planetenrades (5) jeweils zumindest ein Axiallagerelement (6) zugeordnet ist.

## Claims

1. Planetary gear system (1) having a housing (2), a sun gear (3), a planet carrier (4), at least one planet gear (5) and a ring gear (6), wherein the planet carrier (4) is rotatably mounted in the housing (2), wherein the housing (2) defines a mounting direction (7) for mounting the planet carrier (4) and the planet carrier (4) has a bearing seat (8) on its outer side, which is arranged adjacent to an insertion end (9) of the planet carrier (4) and, in the position of use of the planet carrier (4), behind the ring gear (6) in the mounting direction (7) and has an outside diameter which is smaller than an inside diameter, in particular than a tip circle diameter, of the ring gear (6), wherein a bearing seat (12) of the planet carrier (4), which is arranged in front of the ring gear (6) and/or adjacent to an end (13) of the planet carrier (4) facing away from the insertion end (9) in the mounting direction (7) and in the position of use of the planet carrier (4), has a diameter which is greater than the inside diameter, in particular than the tip circle diameter, of the ring gear (6) and/or larger than a diameter of the bearing seat (8) of the planet carrier (4) adjacent to the insertion end (9), **characterized in that** the at least one planet gear (5) is designed as a stepped planet gear, has two bearing seats (20, 21) and at least two toothings (18, 19), namely a sun gear toothing (19) meshing with the sun gear (3) and a ring gear toothing (18) meshing with the ring gear (6), **in that** the ring gear toothing (18) of the planet gear (5) is arranged between the two bearing seats (20, 21) of the planet gear (5), **in that** one bearing seat (20) of the planet gear (5) is arranged between an insertion end (22) of the planet gear (5) and the ring gear toothing (18), wherein this bearing seat (20) has an outside diameter which is smaller than the outside diameter of the ring gear toothing (18), **in that** the other bearing seat (21) of the planet gear (5) is arranged between the ring gear toothing (18) and the sun gear toothing (19) of the planet gear (5), **in that** the planet carrier (4) has at least one planet receptacle (14) for the at least one planet gear (5), and **in that** the planet receptacle (14) has an insertion opening (15), through which the at least one planet gear (5) can be inserted into the planet receptacle (14) in a mounting direction (16) in its position of use, wherein the at least one planet receptacle (14) has a bearing seat (25) adjacent to its insertion opening (15) for an outer side, in particular for an outer ring (24), of a pivot bearing (23) of the at least one planet gear (5), which has an inside diameter which is at least as large as the outside diameter of the ring gear toothing (18) of the at least one planet gear (5), and wherein a pivot bearing (23) arranged on this bearing seat (25) has an outside diameter which is at least as large as the outside diameter of the ring gear toothing (18) of the at least one planet gear (5).

2. Planetary gear system (1) according to claim 1, wherein the housing (2) has a planet carrier receptacle (10) with an insertion opening (11) for the planet carrier (4), through which the mounting direction (7) of the planet carrier (4) is defined, and/or wherein the planet carrier (4) is formed in one piece.

3. Planetary gear system (1) according to claim 1 or 2, wherein the planet carrier (4) has on its outer side two bearing seats (8, 12) which are axially spaced apart from one another in relation to its axis of rotation (R) and between which the ring gear (6) is arranged when the planet carrier (4) is in the position of use.

4. Planetary gear system (1) according to one of the preceding claims, wherein the planet carrier (4) has a shaft, in particular an output shaft, or is designed as a shaft, in particular as an output shaft.

5. Planetary gear system (1) according to one of the preceding claims, wherein the at least one planet gear (5) is rotatably mounted in the planet carrier (4) and meshes with the sun gear (3) and with the ring gear (6).

6. Planetary gear system (1) according to one of the preceding claims, wherein the mounting direction (7) of the planet carrier (4) into the housing (2) and the mounting direction (16) of the at least one planet gear (5) into the planet receptacle (14) coincide, and/or wherein the planet receptacle (14) is designed as a blind hole or as a stepped bore.

7. Planetary gear system (1) according to one of the preceding claims, wherein the planet carrier (4) has at least one side opening (17) into a planet receptacle (14) of the planet carrier (4).

8. Planetary gear system (1) according to one of the preceding claims, wherein the two toothings (18, 19) of the planet gear (5) are different, and/or wherein the two toothings (18, 19) are axially spaced from each other with respect to an axis of rotation of the planet gear (5).

9. Planetary gear system (1) according to one of the preceding claims, wherein the planet receptacle (14) has a side opening (17) for a ring gear toothing (18) of the planet gear (5), which opening is aligned transversely to the axis of rotation (R) of the planet carrier (4).

10. Planetary gear system (1) according to one of claims 1 to 9, wherein a pivot bearing (23), in particular a radial bearing, whose outer diameter is smaller than the outer diameter of the ring gear toothing (18) of the at least one planet gear (5), is arranged on the bearing seat (20), which is arranged between the insertion end (22) of the planet gear (5) and the ring gear toothing (18).

11. Planetary gear system (1) according to one of claims 1 to 10, wherein the ring gear toothing (18) of the at least one planet gear (5) is a helical toothing and/or wherein the sun gear toothing (19) of the at least one planet gear (5) is a helical toothing.

12. Planetary gear system (1) according to one of the preceding claims, wherein a helical toothing of the planetary gear system (1) between the at least one planet gear (5) and the sun gear (3) and a helical toothing of the planetary gear system (1) between the at least one planet gear (5) and the ring gear (6) of the planetary gear system (1) are matched to one another in such a way that an amount of an effective axial force resulting from axial forces caused by the helical toothings (18, 19) during operation of the planetary gear system (1) is less than 10% of an amount of one, preferably a smallest, of the axial forces caused by the helical toothings (18, 19) in each case, or that axial forces caused by the helical toothings (18, 19) during operation of the planetary gear system (1) cancel each other out.

13. Planetary gear system (1) according to the preceding claim, wherein a ratio of the helix angles of the helical toothings (18, 19) corresponds to a ratio of the pitch circle diameters of the helical toothings (18, 19).

14. Planetary gear system (1) according to one of the preceding claims, wherein the at least one planet gear (5) comprises a planet shaft (27) and the sun gear toothing (19) is formed on a sun pinion (28) which is arranged on the planet shaft (27).

15. Planetary gear system (1) according to one of the preceding claims, wherein the planetary gear system (1) has at least one axial bearing element (26), in particular an axial sliding disk, which is assigned to at least one pivot bearing (23) for rotatably mounting the at least one planet gear (5) and is set up to absorb axial forces, preferably wherein at least one axial bearing element (6) is assigned to each pivot bearing (23) of the planet gear (5).

## Revendications

1. Train planétaire (1) avec un carter (2), une roue solaire (3), un porte-satellites (4), au moins un pignon satellite (5) et une couronne de train planétaire (6), dans lequel le porte-satellites (4) est supporté avec possibilité de rotation dans le carter (2), dans lequel le carter (2) définit un sens de montage (7) pour le montage du porte-satellites (4) et le porte-satellites (4) présente sur son côté extérieur un siège de palier (8) qui est voisin d'une pivot (9) du porte-satellites (4) et disposé, dans la position d'utilisation du porte-satellites (4), derrière la couronne de train planétaire (6) dans le sens de montage (7) et qui présente un diamètre extérieur plus petit qu'un diamètre intérieur, en particulier qu'un diamètre de cercle de couronne, de la couronne de train planétaire (6), dans lequel un siège de palier (12) du porte-satellites (4) qui est disposé, dans le sens de montage (7) et dans la position d'utilisation du porte-satellites (4), devant la couronne de train planétaire (6) et/ou au voisinage d'une extrémité (13) du porte-satellites (4) opposée au pivot (9) présente un diamètre qui est plus grand que le diamètre intérieur, en particulier que le diamètre de cercle de couronne, de la couronne de train planétaire (6) et/ou plus grand qu'un diamètre du siège de palier (8) du porte-satellites (4) voisin du pivot (9), **caractérisé en ce que** l'au moins un pignon satellite (5) est conformé comme un train planétaire à gradins, comporte deux sièges de palier (20, 21) et au moins deux dentures (18, 19), à savoir une denture de roue solaire (19) qui engrène avec la roue solaire (3) et une denture de couronne de train planétaire (18) qui engrène avec la couronne de train planétaire (6), **en ce que** la denture de couronne de train planétaire (18) du pignon satellite (5) est disposée entre les deux sièges de palier (20, 21) du pignon satellite (5), **en ce qu'**un siège de palier (20) du pignon satellite (5) est disposé entre un pivot (22) du pignon satellite (5) et la denture de couronne de train planétaire (18), ce siège de palier (20) présentant un diamètre extérieur qui est plus petit que le diamètre extérieur de la denture de couronne de train planétaire (18), **en ce que** l'autre siège de palier (21) du pignon satellite (5) est disposé entre la denture de couronne de train planétaire (18) et la denture de roue solaire (19) du pignon satellite (5), **en ce que** le porte-satellites (4) comporte au moins un logement de satellite (14) pour l'au moins un pignon satellite (5) et **en ce que** le logement de satellite (14) comporte une ouverture d'introduction (15) à travers laquelle l'au moins un pignon satellite (5) peut être inséré dans un sens de montage (16) dans sa position d'utilisation dans le logement de satellite (14), l'au moins un logement de satellite (14) comportant, au voisinage d'une ouverture d'introduction (15), un siège de palier (25) pour un côté extérieur, en particulier pour une bague extérieure (24), d'un coussinet de pivotement (23) de l'au moins un pignon satellite (5) qui présente un diamètre intérieur au moins aussi grand que le diamètre extérieur de la denture de couronne de train planétaire (18) de l'au moins un pignon satellite (5), et un coussinet de pivotement (23) disposé sur ce siège de palier (25) présentant un diamètre extérieur au moins aussi grand que le diamètre extérieur de la denture de couronne de train planétaire (18) de l'au moins un pignon satellite (5).

2. Train planétaire (1) selon la revendication 1, dans lequel le carter (2) comporte un logement de porte-satellites (10) muni d'une ouverture d'introduction (11) pour le porte-satellites (4) par laquelle le sens de montage (7) du porte-satellites (4) est défini, et/ou le porte-satellites (4) est formé d'une pièce.

3. Train planétaire (1) selon la revendication 1 ou 2, dans lequel le porte-satellites (4) présente sur son côté extérieur deux sièges de palier (8, 12) écartés l'un de l'autre dans le sens axial par rapport à son axe de rotation (R), entre lesquels la couronne de train planétaire (6) est disposée quand le porte-satellites (4) se trouve dans la position de fonctionnement.

4. Train planétaire (1) selon l'une des revendications précédentes, dans lequel le porte-satellites (4) comporte un arbre, en particulier un arbre de sortie, ou est conformé comme un arbre, en particulier un arbre de sortie.

5. Train planétaire (1) selon l'une des revendications précédentes, dans lequel l'au moins un pignon satellite (5) est supporté avec possibilité de rotation dans le porte-satellites (4) et engrène avec la roue solaire (3) et avec la couronne de train planétaire (6).

6. Train planétaire (1) selon l'une des revendications précédentes, dans lequel le sens de montage (7) du porte-satellites (4) dans le carter (2) et le sens de montage (16) de l'au moins un pignon satellite (5) dans le logement de satellite (14) coïncident et/ou dans lequel le logement de satellite (14) est conformé comme un trou borgne ou comme un perçage en gradins.

7. Train planétaire (1) selon l'une des revendications précédentes, dans lequel le porte-satellites (4) comporte au moins une ouverture latérale (17) dans un logement de satellite (14) du porte-satellites (4).

8. Train planétaire (1) selon l'une des revendications précédentes, dans lequel les deux dentures (18, 19) du pignon satellite (5) sont différentes et/ou dans lequel les deux dentures (18, 19) sont écartées l'une de l'autre dans le sens axial par rapport à un axe de rotation du pignon satellite (5).

9. Train planétaire (1) selon l'une des revendications précédentes, dans lequel le logement de satellite (14) comporte une ouverture latérale (17), orientée transversalement par rapport à l'axe de rotation (R) du porte-satellites (4), pour une denture de couronne de train planétaire (18) du pignon satellite (5).

10. Train planétaire (1) selon l'une des revendications 1 à 9, dans lequel est disposé sur le siège de palier (20) disposé entre le pivot (22) du pignon satellite (5) et la denture de couronne de train planétaire (18) un coussinet de pivotement (23), en particulier un palier radial, dont le diamètre extérieur est plus petit que le diamètre extérieur de la denture de couronne de train planétaire (18) de l'au moins un pignon satellite (5).

11. Train planétaire (1) selon l'une des revendications 1 à 10, dans lequel la denture de couronne de train planétaire (18) de l'au moins un pignon satellite (5) est une denture oblique et/ou dans lequel la denture de roue solaire (19) de l'au moins un pignon satellite (5) est une denture oblique.

12. Train planétaire (1) selon l'une des revendications précédentes, dans lequel une denture oblique du train planétaire (1) entre l'au moins un pignon satellite (5) et la roue solaire (3) et une denture oblique du train planétaire (1) entre l'au moins un pignon satellite (5) et la couronne de train planétaire (6) du train planétaire (1) sont adaptées l'une à l'autre de telle manière qu'une grandeur d'une force axiale effective résultant des forces axiales causées pendant le fonctionnement du train planétaire (1) par les dentures obliques (18, 19) est inférieure de 10 % d'une grandeur d'une des forces axiales produites par chacune des dentures obliques (18, 19), de préférence de la plus petite, ou que les force axiales causées par les dentures obliques (18, 19) pendant le fonctionnement du train planétaire (1) s'annulent mutuellement.

13. Train planétaire (1) selon la revendication précédente, dans lequel un rapport des angles d'inclinaison des dentures obliques (18, 19) correspond à un rapport des diamètres de cycloïdes des dentures obliques (18, 19).

14. Train planétaire (1) selon l'une des revendications précédentes, dans lequel l'au moins un pignon satellite (5) comporte un arbre de pignon satellite (27) et la denture de roue solaire (19) est formée sur une roue solaire (28) qui est disposée sur l'arbre de pignon satellite (27).

15. Train planétaire (1) selon l'une des revendications précédentes, dans lequel le train planétaire (1) comporte au moins un élément de palier axial (26), en particulier une rondelle à palier lisse axial, qui est associé à au moins un coussinet de pivotement (23) pour l'appui pivotant de l'au moins un pignon satellite (5) et conçu pour absorber des forces axiale, de préférence dans lequel au moins un élément de palier axial (6) est associé à chaque coussinet de pivotement (23) du pignon satellite (5).
